# EUROPEAN PATENT APPLICATION

(11) **EP 1 160 693 A2**
(43) Date of publication of application: **05.12.2001**
(21) Application number: 01304664.4
(22) Date of filing: 25.05.2001
(51) Int. Cl.: G06F 17/30

(54) **Review data retrieval system**

(30) Priority: 31.05.2000 JP 2000161518
(71) Applicant: Ebide, Inc., Tokyo 101-0032 (JP)
(72) Inventor: Kori, Etsuo, c/o Ebide, Inc., Tokyo 101-0032 (JP)
(74) Representative: Lucas, Brian Ronald

(57) **Abstract**

The present invention aims at providing a review data(9) retrieval system capable of easily extracting a desired book. The system includes a review database containing a number or records(9) in a storage device(3-1,3-2) of a server(2-1,2-2) connected to a network(1). The record at least includes data(9) relating to the title of a book whose review has been issued, the field of a book, the name of an author, the name of a publisher, the data(9) relating to the name of a media carrying the review of a book, and the field of a book. A client(4,5,6) starts retrieving from the field of a medium carrying the review, the name of a medium, the field of a book carrying the review, or the title of a book, and finally displays the title of a book and the review so that the client (4,5,6) can have the opportunity of easily extracting a desired book.

## Description

### Background of the Invention

### Field of the Invention

The present invention relates to a review data retrieval system, and more specifically to a review data retrieval system for providing an opportunity of easily extracting desired books by providing optional statistical data in various statistical data about reviews and introductory remarks of books, or by listing reviews, introductory remarks, or the contents of books retrieved from statistical data through a network.

### Description of the Prior Art

Recently, networks, especially Internet, are widely used. Internet has rapidly been popularized as a world-wide network for globally transmitting information through WWW and Web browsers. With the remarkable progress of Internet, there are various sites established for providing common information. There are also sites for exclusively retrieving a desired site from an enormous number of sites. In the sites for providing common information, some sites have pages on which information about books in various fields is introduced. Those providing the information about books show the titles of new books, authors, and publishers for every field, or show the titles of books, their reviews, and introductory remarks.

On the sites showing the titles of new books, authors, and publishers for every field no information other than the titles of new books, authors, and publishers can be found. In addition, on the sites showing the titles of books, their reviews, and introductory remarks, the largest possible number of books are listed on a page with very short and brief remarks and introduction added to the titles, and no information other than the titles of books, and their reviews and introductory remarks can be found at present.

For example, when a book in a special field such as a scientific book is searched for, or when the information about a book whose title can be obtained in advance is searched for, the purpose is clear from the beginning. Therefore, a smaller area can be searched using the names of a field and a book. Then, by checking the contents and extracting a desired book, the initial purpose can be almost attained. Since there is no significant difference between the case in which a user actually goes to a book store and the case in which the user retrieves a server from clients, there is no problem in the method for providing information about books from a server.

However, a number of users who want to read some interesting books without specifying the title of a book normally try to retrieve the titles of common books and reviews by searching the field of books, the names of authors, the titles of series, the names of publishers, etc. In this case, the titles of books, brief reviews, and introductory remarks require a complicated and laborious selecting operation and a longer time. Thus, a target book cannot be easily selected.

### Summary of the Invention

The present invention has been developed to solve the above mentioned problems, and aims at providing a review data retrieval system capable of easily extracting desired books.

To attain this, the review data retrieval system according to the present invention includes a server having a database of reviews and a client who retrieves and obtains data of desired reviews from the server connected to a network. The server contains data in the database including at least the title of a book to be given a review or an introductory remark on a medium and the name of a medium storing the review or the introductory remark, and is designed to output the number of operations of listing at least the title of the book and the review or the introductory remark of the book on the medium to the client through the network at a request from the client.

Then, the server further includes in the database the data of the reading characters of the title of the book, the name of the author or editor, the name of the publisher, the name of a reviewer or selector to be output to the client through the network. The server also includes in the database the data of the year and the month of the publication, the publisher, the issuer, the type, an ISBN code, the list price, and the price of the body of the first edition, the second impression, the printings, the revised version, etc., of the book to be output to the client through the network. The server further includes in the database the data of the field of the book, the field, the issue date, the publication date, the magazine code, the listing year, month, and page of the review or the introductory remark of the medium on which the review or the introductory remark of the book is listed to be output to the client through the network. Furthermore, the server includes the summary of the contents of the book to be output to the client through the network. The server further includes a graphic database containing the graphic data of the cover of the book to be output to the client through the network.

The server includes the database such that it can be retrieved from the client using a keyword indicating the name of the medium containing the review or the introductory remark, the field of the medium, the field of the book, or the contents of the book. Furthermore, the server outputs the results of counting the number of processes of specifying the retrieval by the client in the database for each medium on which a review or an introductory remark is listed, for each field of a medium, for each title of a book, for each field of a medium, for each title of a book, for each field of a book, for each author, for each publisher, or for each keyword to the client through the network. Furthermore, the server outputs the data of the number of times of listing on a medium the review or the introductory remark for each book, for each field of the book, for each publisher, or for each author in the descending order within a predetermined term of listing the review or the introductory remark for each book, for each field of the book, for each publisher, or for each author. The server further outputs a plurality of reviews listed on the medium of the book together with the title of the book such that they can be displayed as a list to the client through the network. Furthermore, the server classifies the books based on the reviews and displays them as a list and outputs the data to the client through the network.

In addition, the database is configured such that, for example, it can be deleted if a predetermined period has passed. Furthermore, the medium can be, for example, a magazine, a newspaper, a television, a home page of Internet, an information board, a BS, etc. In addition, the client can be, for example, a personal computer, a LAN terminal, or a mobile communications appliance.

Thus, since arbitrary statistic data in various statistic data of reviews is provided from the server to the client in the network, the client has an opportunity to easily extract a desired book, thereby successfully removing the necessity of the conventional operation of retrieving a review or an introductory remark through a network requiring a high communications rate so that a desired book is retrieved based on the contents of the review and remark. Thus, an economical and convenient system can be realized.

### Brief Description of the Drawings

FIG. 1 is a block diagram of the review data retrieval system according to an embodiment of the present invention;
FIG. 2 is a table showing the data configuration of one record of a review database stored in the storage device of a server in the review data retrieval system;
FIG. 3 is a flowchart of the procedure of the operation of generating data of a record in a review database;
FIG. 4 shows a flow of the outline of a change made from the top page when a client accesses a server by activating a browser;
FIG. 5 shows an example of displaying the page of 'Reputation of a book' which is one of the child pages branching from the top page;
FIG. 6 is a flowchart of the operation when a button for keyword retrieval of the page 'Reputation of a book' is pressed by a client;
FIGS. 7A and 7B show examples of displaying data used in the operation flow;
FIG. 8 shows an example of displaying data used in the operation flow;
FIG. 9 shows an example of displaying data used in the operation flow;
FIG. 10 shows an example of displaying data used in the operation flow;
FIG. 11 is a flowchart showing the operation performed when a book field retrieval button on the page 'Reputation of a book' is pressed by a client;
FIG. 12 shows an example of displaying the field of a book used in the flow of the book field retrieving operation;
FIG. 13 is a flowchart showing the operation performed when a newspaper and magazine title retrieval button on the page 'Reputation of a book' is pressed by a client;
FIGS. 14A and 14B show examples of displaying data used in the flow of newspaper and magazine title retrieving operations;
FIGS. 15A and 15B show examples of displaying data used in the flow of newspaper and magazine title retrieving operations;
FIGS. 16A and 16B show examples of displaying used in the flow of newspaper and magazine title retrieving operations; and
FIGS. 17A and 17B show examples of displaying data on the screen by clicking a 'Reputation level of a book' selection operation button.

### Description of the Preferred Embodiment

The embodiments of the present invention are described below by referring to the attached drawings.

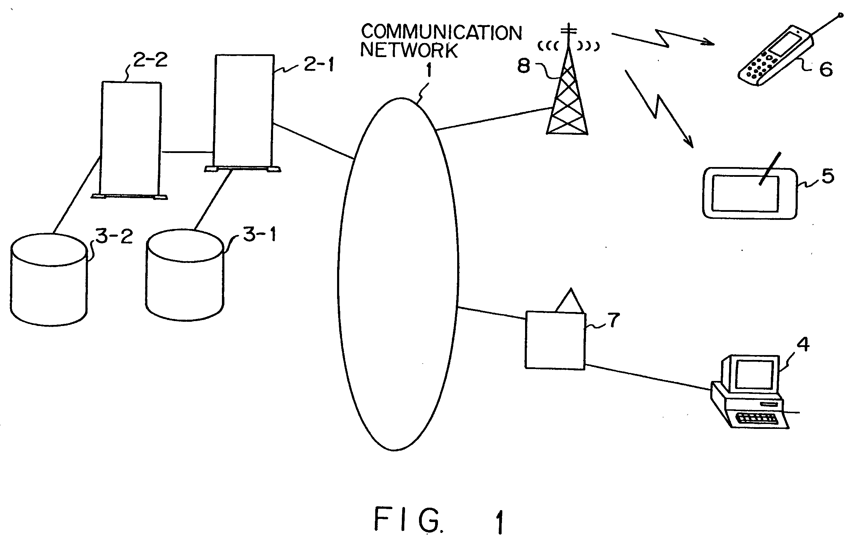

FIG. 1 is a block diagram of the review data retrieval system. As shown in FIG. 1, a server system comprising servers 2-1 and 2-2 are connected to a communications network 1. The server 2-1 (computer) is controlled by a protocol server (program), and under the control of the server, a character and numeral data management server (program) is driven. The servers 2-1 and 2-2 cooperate with each other.

Storage devices 3-1 and 3-2 are connected to the servers 2-1 and 2-2 respectively. A large volume of review database is stored in the storage device 3-1, and the graphic data of the cover of a book corresponding to the review database is stored in the storage device 3-2.

The books according to the present embodiment includes a mook (an object between a book and a magazine) . 'Carry' and 'list' have the same meanings in this specification.

To the above mentioned communications network 1, a terminal device to be used indoors such as a personal computer 4, etc. as a client, an electronic notebook 5, a portable telephone 6, a mobile terminal device such as a very small computer, etc. not shown in the attached drawings, or a LAN terminal, etc. are connected using a telephone line through a telephone station 7, a radio line through a radio base station 8, a satellite communications line, a CATV, etc. through a satellite.

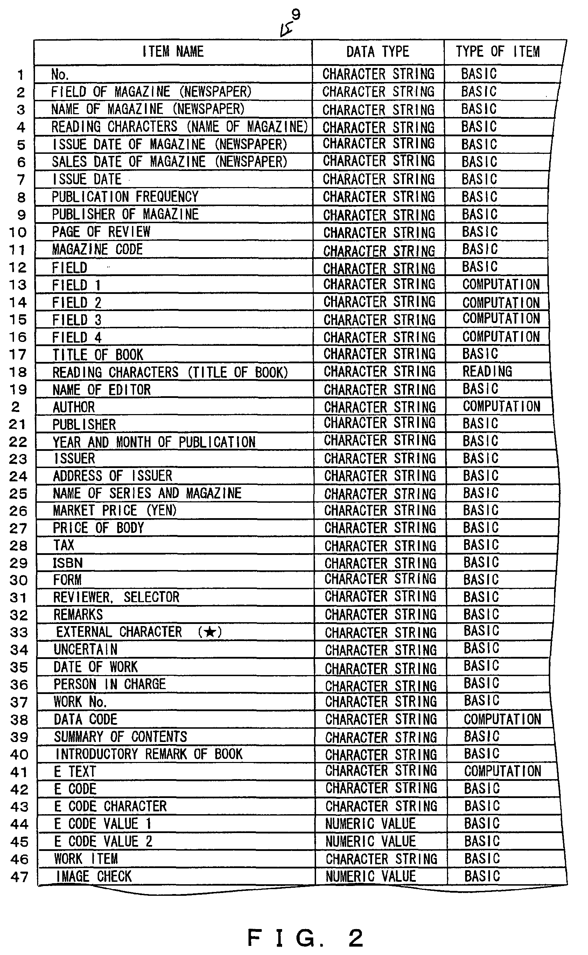

FIG. 2 is a table showing the configuration of the data of one record of review database stored in the storage device 3-1. As shown in FIG. 2, each record 9 forming part of a review database has 47 or more items of data. First, the first 'No.' item contains numeral data assigned in the order of inputting data. In the second through eleventh items, the data relating to the media such as a newspaper, a magazine, etc. in which a review and an introductory remark are carried is stored. For example, the second 'field of book (paper)' item stores field class data of a medium, the third 'title of book (paper) ' item stores the name data of a medium. Each of the fourth through eleventh items stores the reading characters of the name of a medium, a publication date, an issue date, a publication year and month, the frequency of publication, a publisher, the page of remark or introductory remark, the number or a magazine code, etc. specifying a magazine when an object is a magazine.

The twelfth through thirtieth items store the data relating to the books to be described in a review and an introductory remark. For example, the twelfth through sixteenth items 'field', 'field', 'field 2' ... store data classified into respective fields. There are five items for fields because one book does not always belong to only one field, but can be classified into various fields.

The seventeenth through twenty third items store data such as the title of a book, reading characters, the name of an editor or an author, a publisher, a publication date (year, month, and day) , an issuer, etc. The twenty fourth through twenty eighth items store data such as an issuer, an agent to contact, the title of a book or magazine in which a series are carried, a market price, the price of a body, tax, etc.

Items after the twenty-ninth item store an 'ISBN' item storing an ISBN code corresponding to a book ID code specifying a book, a 'type' item storing data indicating the classification of books such as a hard cover, a pocket book, a new book, a CD-ROM type, a net book read using an electronic notebook, etc., a 'reviewer and selector' item storing name data of a reviewer or a selector, a 'review and introductory remark' item storing data such as a text file, etc. of the contents of a review and an introductory remark, a ' summary of contents' item storing the summary of the contents of a book published free of charge by a publisher, an item storing data indicating whether or not a book cover image data exists and indicating a linked-to item.

Each of the above mentioned items contains a data area for each item name, and the data area stores data indicating the attribute of data as to whether or not data comprises character strings, numerics, basic data input manually, data generated in an arithmetic operation, etc.

Furthermore, the storage device 3-2 stores a database comprising an image file whose extension is represented by, for example, gif, jpg, mag, pcx, bmp, etc. An image check item, etc. for recognition of the existence/non-existence of an image database is also contained in the record 9.

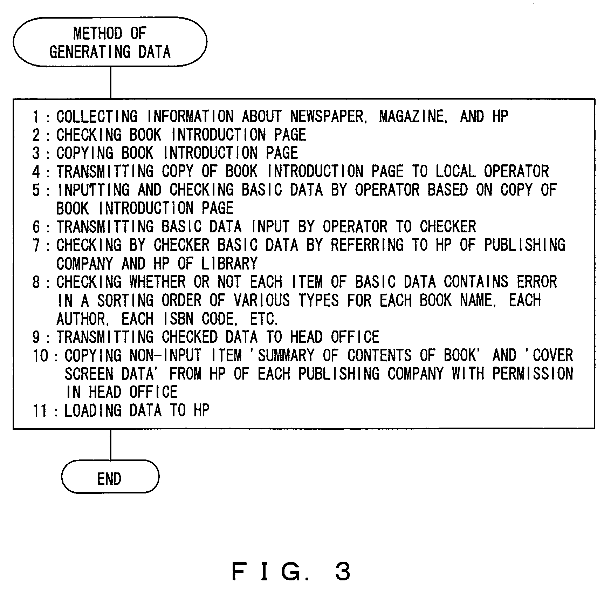

FIG. 3 is a flowchart of the operation procedure of generating data of the above mentioned record 9. As shown in FIG. 3, in step 1, a newspaper, a magazine, a URL of a home page of Internet are collected. In this operation, the largest possible number of variations of newspapers, magazines, and URLs are collected.

Then, in step 2, each page of the collected magazines and newspapers is checked for the review or the introductory remark of a book (hereinafter referred to simply as a book introduction) . This process can be performed by, for example, detecting a page describing a book introduction, and applying a marking tag on the page, etc.

Then, in step 3, a copy of a book introduction page marked in a magazine and a newspaper is made. In step 4, the copy of the book introduction page is transmitted to a local operator. The operator is a destination of the copy, and is not limited to a local operator. That is, the operator can live anywhere as far as he or she can perform the following process regardless of sex or age.

In step 5, the operator inputs predetermined basic data to a data file in a personal computer or a word processor in a predetermined format based on the received copy of the book introduction. In the inputting operation, the data of the first through tenth items, the sixteenth through thirtieth items, the thirty-second through thirty-fourth items, etc. of the record 9 shown in FIG. 2 are input. The attribute data storage area (not shown in FIG. 2) of the record 9 shown in FIG. 2 has a data input area indicating that the data of a corresponding item is to be input by the operator.

Then, in step 6, the basic data input by the operator is transmitted to a predetermined checker. The data can be transmitted by facsimile, communications through a personal computer, electronic mail, etc. The checker can live anywhere so far as he or she can perform the following processes regardless of sex or age.

In step 7, upon receipt of the transmitted data, the checker first checks whether or not the basic data has been incorrectly input by referring to the home pages of the publisher and the library.

Furthermore, in step 8, the checker checks the data whether or not it is correct for each book title, author, ISBN code, etc. Another attribute data storage area (not shown in FIG. 2) of the record 9 shown in FIG. 2 has a data input area indicating that the data of a corresponding item is to be checked by the checker.

In step 9, the checked basic data is transmitted to the head office in which the server 2 is operated. The data can be transmitted by mail, a home delivery system, or an electronic transmission whichever can transmit data the fastest.

In step 10, upon receipt of the basic data from the checker, a predetermined person in the head office first inputs data about an item not input yet. The item not yet input is, for example, text data of a book introduction, the book cover image data stored in the storage device 3-2. These data is obtained from a home page of a publisher or in other methods based on the permission from a reviewer who writes a review or an editor of a medium on which a review is carried.

Furthermore, although not shown in the flowchart in FIG. 3, the person in charge in the head office checks the items input by the operator whether or not there are errors in the items not checked by the checker. Another attribute data storage area (not shown in FIG. 2) of the record 9 shown in FIG. 2 has a data input area indicating that the data of a corresponding item is to be checked by the person in charge in the head office.

In step 11, the checked record 9 is added to the review database in the storage device 3-1 and the image database in the storage device 3-2. Thus, new review data can be carried by the home page of the server 2-1. In this example, the top page (original home page) of the site of the server 2-1 and each page linked to the top page are referred to as a home page.

Described below are the operations of the review database displayed on the screen of the display device of a client of the personal computer 4, the electronic notebook 5, the portable telephone 6, etc. when the client accesses the server 2 through the communications network 1. The operation is performed by the browsers of the server (each server program) of the server 2 (2-1 and 2-2, that is, computers). For example, if the communications network 1 is Internet, the server can be a WWW server (Web server), and the browser can be a WWW browser (Web browser) such as a netscape communicator, an Internet explorer, etc.

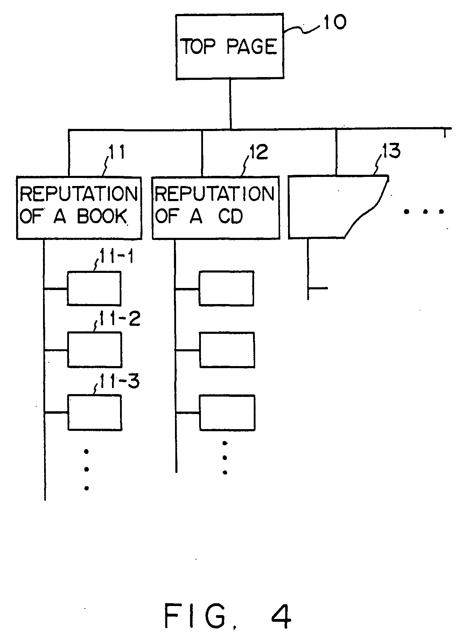

FIG. 4 shows a flow of the outline of a change of the top page of the server 2-1 when the client accesses the server 2-1 by activating the browser. As shown in FIG. 2, a plurality of child pages are linked to the parent page which is a top page 10. The child pages can be a reputation 11 of a book, a reputation 12 of a CD, etc. Other child pages can be a reputation of a video, a reputation of a play, a reputation of a film, etc.

The title of 'reputation of a book', 'reputation of a CD', etc. are changed as necessary.

For easy explanation, it is assumed that an operation button (which can be an appropriate icon) displayed on the screen (not shown in FIG. 4) of the top page 10 is clicked to select the reputation 11 of a book of a child page. The page of the reputation 11 of a book has a number of grandchild pages 11-1, 11-2, 11-3 ... linked to it.

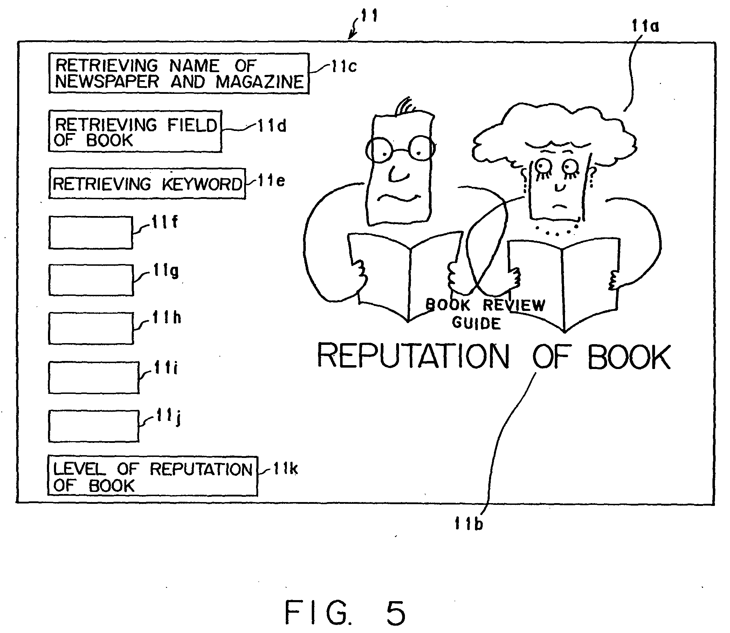

FIG. 5 shows an example of displaying a page of the reputation 11 of a book. As shown in FIG. 5, an appropriate layout (in the example shown in FIG. 5, two male and female persons are reading respective books) 11a outstanding as a top page of child pages is displayed on the right of the screen. An illustration 11b indicating a large characters of the title 'reputation 11 of a book' of the page is displayed below the layout 11a (the display on the display screen of a client is hereinafter simply referred to as a display) . From top to bottom on the left of the screen, operation buttons 11c, lid through 11k for selection of grandchild pages are displayed.

In the example shown in FIG. 5, the three operation buttons for selection 11c, lid, and 11e for the information by retrieving the review database of the server 2-1 are arranged in the order of 'newspaper-magazine title retrieval', 'book field retrieval', and 'keyword retrieval' vertically from the top. Below them, operation buttons for selection 11f through 11k are arranged vertically as other services.

Among them, the operation buttons for selection 11f through 11j correspond to, for example, an introduction to a new book, the practical contents of a book (for example, the first three pages, etc.), the issue fate of a magazine, a display of an opinion about a book, an input page for a questionnaire. The last operation button for selection 11k shows the 'level of the reputation of a book' in the example shown in FIG. 5. The contents corresponding to the operation buttons for selection 11c through 11k can be changed as necessary.

First, in the reverse order of the above mentioned display order, the method of retrieving the keyword used when the operation button for selection 11e is pressed is described below.

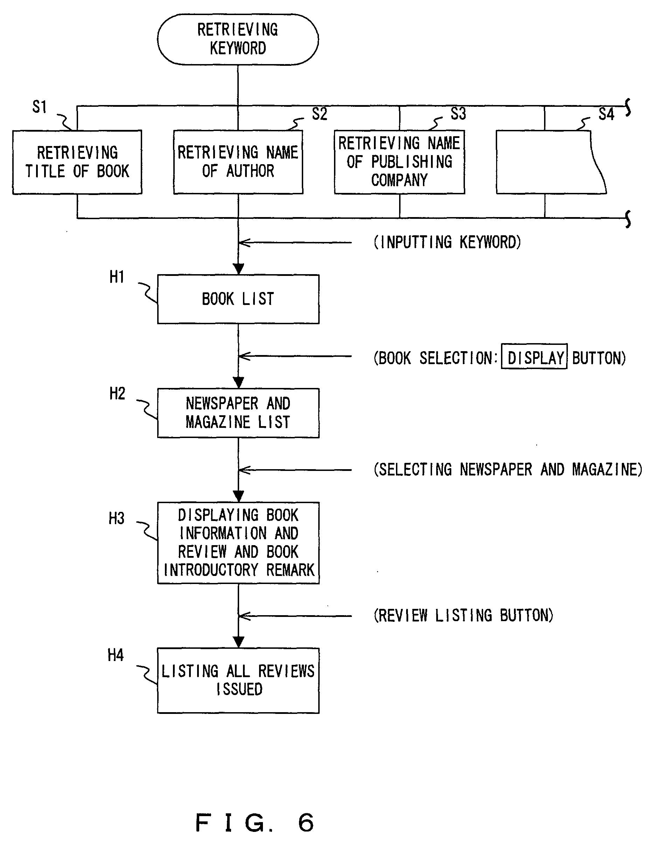

FIG. 6 is a flowchart of the flow of the subsequent screen operation and the displaying process corresponding to the screen operation when the operation button for selection lie for retrieving a keyword of the page of the reputation of a book is pressed by the client.

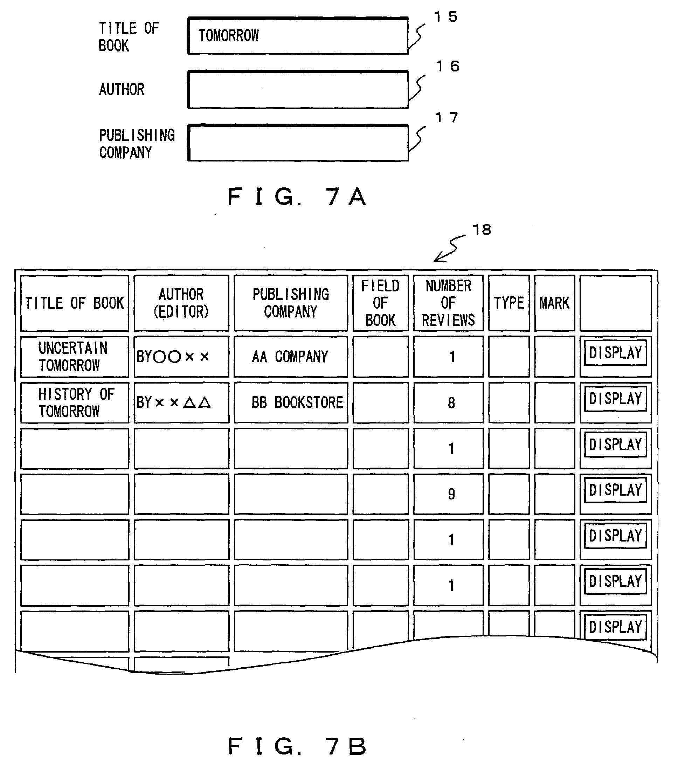

FIGS. 7A, 7B, 8, 9, and 10 show examples of the display.

In the above mentioned retrieval of the keyword, a keyword input for retrieving a book title in step S1, a keyword input for retrieving an author name in step S2, and a keyword of retrieving a publisher name in step S3 are prepared as shown in FIG. 6. In and after step S4, for example, the name of a reviewer is processed.

In this display, for example, a screen shown in FIG. 7A is displayed. That is, on the display screen, as shown in FIG. 7A, a book title input window 15, an author name input window 16, and a publisher name input window 17 are displayed. Although not shown in FIG. 7A, an input window corresponding to step S4 and the subsequent steps is displayed below the publisher name input window 17. In addition, although not shown in FIG. 7A, a button for retrieval (for example, a 'next' button), a button for correction (for example, a 'clear' button), a button for return to the top page (for example, a 'return' button), etc. are displayed.

The title of a desired book is input to the book title input window 15. For example, when a client wants to read a book about tomorrow, 'tomorrow' is input. When a client has a favorite author, he or she inputs the name of the favorite author. Similarly, when a client has a favorite publisher, he or she inputs the name of the favorite publisher to the publisher name input window 17. Only one, two, or three keywords can be input. An input keyword is adopted as an AND key.

To indicate that a keyword has been input, that is, to start a retrieving process, the 'next' button is pressed. Then a book list displaying process shown in the displaying process H1 in FIG. 6 is performed. In the displaying process, the records 9 (refer to FIG. 2) of all books containing the above mentioned keyword 'tomorrow' in the title of the book and the sub-title of the book are retrieved and extracted from the book database. Then, based on the extracted record 9, a book list 18 as shown in FIG. 7B is displayed. The book list 18 contains the columns of the title of a book, an author (editor), a publisher, the field of a book, the number of series (number of issues), a type, a mark, and a display button.

The keyword input to the book title input window 15 shown in FIG. 7A, for example, 'tomorrow' according to the present embodiment is input to the above mentioned column of the title of a book as shown in FIG. 7B. Based on the keyword 'tomorrow', for example, the titles 'Uncertain Tomorrow', 'History of Tomorrow', 'Yesterday, Today, and Tomorrow', 'Developing Tomorrow', 'Incredible Tomorrow', 'Shooting Tomorrow', etc. are displayed.

In addition, the names of the authors or the editors (hereinafter referred to simply as authors) of books displayed in the columns of the titles of books are displayed in the columns of authors (editors). If the name of an author is input to the author name input window 16 in FIG. 7A, then the names of the same author are displayed in the columns of the authors (editors) shown in FIG. 7B. If the name of an author is not input to the author name input window 16 in FIG. 7A, then the names of the author of the books in the columns of the book titles are displayed as 'ooxx', 'xxΔΔ', etc.

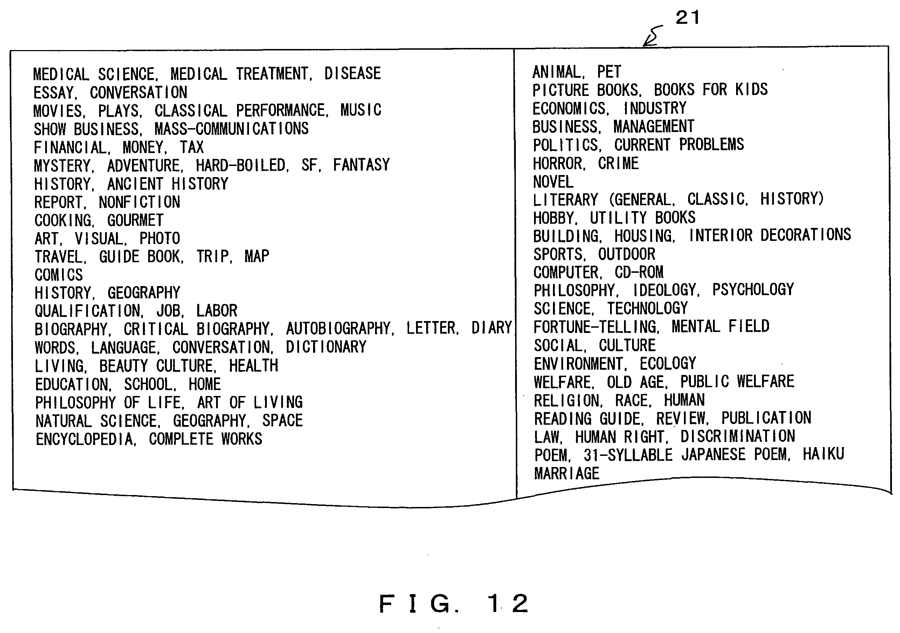

Furthermore, the name of a publisher such as 'AA Company', 'BB Bookstore', 'CC Bookseller's', 'DD Company', 'EE Publishing Company', etc. is displayed in the column a publisher. The fields of books shown later in FIG. 12 are displayed in the book field column. In the issue number column, the number of times the reviews of the book in the book title column are carried on the media such as a magazine, a newspaper, television, a home page or an information board of Internet or BS, etc. (hereinafter referred to simply and representatively as a magazine) is displayed as, for example, '1', '8', '1', '9', ...

In the type column, the type of a book such as a hard cover, a pocket book, a new book, a CD-ROM type, a net book read through an electronic notebook, etc. is displayed. In the mark column, a number or a symbol is displayed. The displayed number or symbol indicate a service prepared for the user.

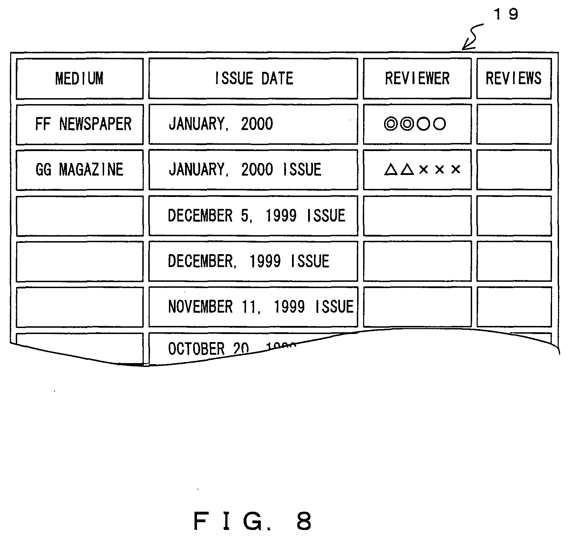

If a client is interested that the review of 'Uncertain Tomorrow' by written by 'ooxx' published by 'AA Co.' are carries 11 times on any magazine, etc. and presses the rightmost display button of the row of 'Uncertain Tomorrow', then the process of displaying 'newspaper-magazine list' of the displaying process H2 shown in FIG. 6 is performed. The 'newspaper-magazine list' displaying process displays the newspaper-magazine list 19 shown in FIG. 8 showing in detail the media such as magazines, etc. carrying reviews.

The display of the newspaper-magazine list 19 shown in FIG. 8 comprises the columns of 'medium' and ' issue date' of a review, 'reviewer', and 'review'. The name of a medium carrying the review of 'Uncertain Tomorrow' in the above mentioned example is displayed as the FF Newspaper, the GG magazine, etc. in the media column.

The issue date of a magazine and a newspaper such as January 6, 2000, January, 2000, etc. is displayed in the issue date column. The broadcast date or issue date on television, a home page or an information board of Internet, or BS, etc. is also displayed in the issue date column.

The name of a reviewer of a review such as ooxx, OO**, etc. are displayed in the reviewer column. Whether or not a review or an introductory remark of a selected book 'Uncertain Tomorrow' exists in the database is displayed in the review column.

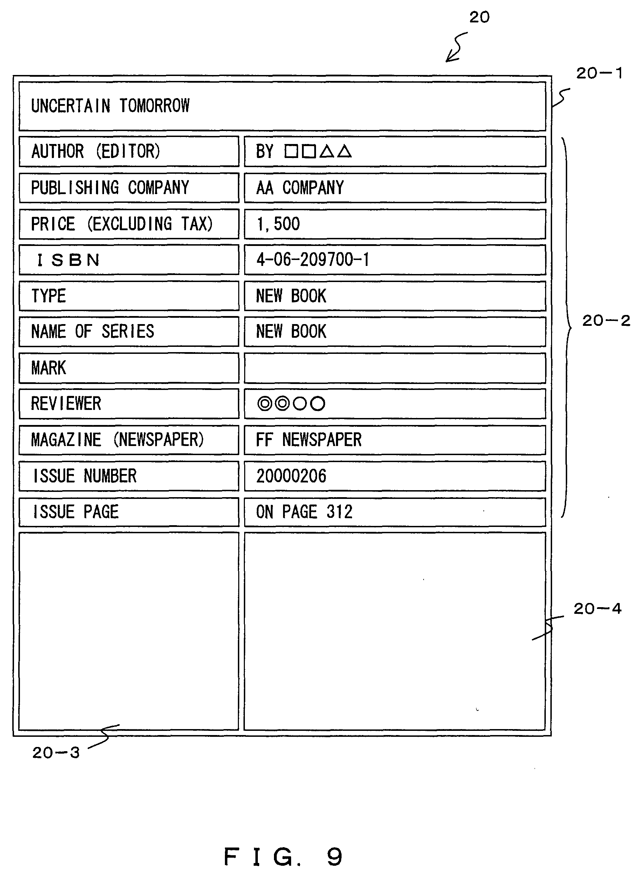

For example, if a portion in the first row in the FF Newspaper is specified (for example, 'FF Newspaper', which is the name of a medium carrying the review, is pressed), the process of 'displaying book information and review-introductory remark' of the displaying process H3 shown in FIG. 6 is performed, and a detailed display 20 of a book and a review is displayed as shown in FIG. 9.

In the detailed display 20 of a book and a review, the title of a book is displayed by large characters in an upper column 20-1. In the second through ninth narrow intermediate columns 20-2, the name of an author (editor), the name of a publishing company, the price of a book excluding tax, an ISBN code, the format of a book, the name of a series, a mark, the name of a reviewer, the name of a magazine of the review, the issue number of the review, and the issue page of a review are displayed.

Then, the lower row is divided into a left column 20-3 and a left column 20-3 and a right column 20-4. An image of the cover of the book is displayed in the left column 20-3. The summary of the contents of a book provided by a publishing company is displayed in the right column 20-4. Furthermore, below the display screen, the contents of the review carried on the selected FF Newspaper are displayed based on the permission of the reviewer or the medium (magazine or newspaper) of the review.

On the screen shown in FIG. 9, a review list button is prepared although it is not shown in the attached drawings. When the review list button is pressed, the displaying process of the list of all carried reviews in the displaying process H4 shown in FIG. 6 is performed.

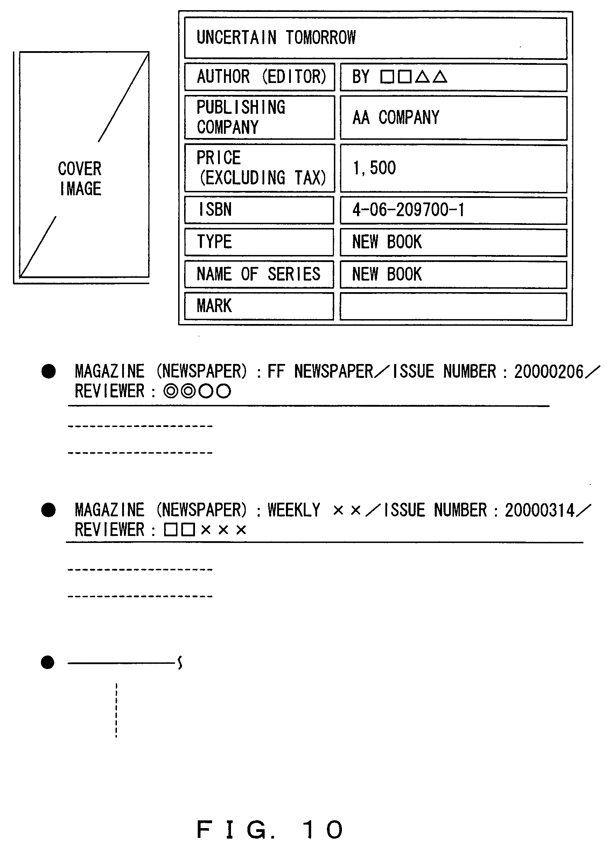

In this displaying process of the displaying process H4, as shown in FIG. 10, the attributes of a selected book such as the title of the book, the author (editor), the publishing company, the price, ISBN, a type, the name of a series, a mark, a cover image, etc. are displayed. Below them, all reviews shown in FIG. 8 are displayed such that they can be collectively scrolled. Similarly, in this case, the reviews are displayed by the permission of the reviewer of the review or the company of the magazine or the newspaper carrying the review.

Thus, for example, from among reviews having a larger number of issues, an interesting book is selected, and all reviews can be read, thereby easily determining whether or not the book is to be purchased.

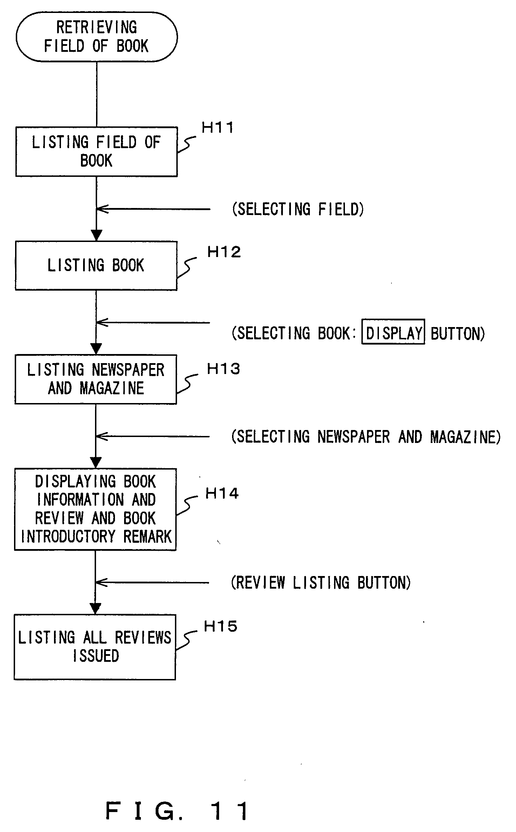

FIG. 11 is a flowchart of the screen operation and the flow of the displaying process corresponding to the screen operation performed after the operation button for selection 11d for retrieval of the field of a book on the page 'reputation of a book' is pressed by a client.

Then, FIG. 12 shows an example of displaying the field of a book used in the operation flow in retrieving the field of the book.

In retrieving the field of a book, the process of displaying a 'book field list' of the displaying process H11 is performed as shown in FIG. 11. In this displaying process, as shown in FIG. 12, a number of fields 21 of books are displayed . In this example, the fields 21 can be easily selected by the client if similar contents, for example, strict contents, academic contents, contents for kids, etc. are arranged in group units and are not in alphabetical.

As shown in FIG. 12, the field 21 is divided into left and right columns. The left column starts with 'medical science, medical treatment, disease' followed by 'essay, conversation', 'natural science, geography, space', and 'encyclopedia, complete works', and then continues below to further fields not shown in 12. The right columns starts with 'animals, pets' followed by 'picture books, children's books' through 'poetry, 31-syllable Japanese poem, haiku', 'marriage', ..., and then continues below to further fields not shown in FIG. 12.

When the first field 'medical science, medical treatment, disease' in the left column is selected and clicked, the 'book list' displaying process of the displaying process H12 shown in FIG. 11 is performed. The 'book list' displaying process is the same as the ' book list' displaying process of the displaying process H1 shown in FIG. 6, and the book list 18 similar to the list shown in FIG. 7B is displayed. However, when data is displayed based on the selection of the field of a book, the records 9 of all books classified as the field 'medical science, medical treatment, disease' are retrieved and extracted from a book database, and the book list 18 is displayed based on the extracted record 9.

Therefore, the books having the titles relating to the fields of the 'medical science, medical treatment, disease' such as 'psychiatrist of ...', 'medicine for AIDS', 'topics about atopy', 'influenza and virus', 'danger of virus', etc. are displayed in the book title column of the book list 18 shown in FIG. 7B. In this case, the 'field of book' is not displayed.

When the display button for the row corresponding to a desired title or a book is displayed, the process of displaying a 'newspaper-magazine list' of the displaying process H13 shown in FIG. 11. The displaying process is the same as the displaying process H2 shown in FIG. 6, and the same list as the newspaper-magazine list 19 which is shown in FIG. 8 and carries the reviews of the books selected by the above mentioned display button, and the data such as a medium, an issue date, a reviewer, etc. is listed.

The process of displaying the 'book information and review-introduction' in the subsequent displaying process H14 is the same as the displaying process of the displaying process shown in FIG. 6. Furthermore, the process of displaying the 'list of all reviews' in the displaying process H15 shown in FIG. 11 is the same as the displaying process of the displaying process H4 shown in FIG. 6. Thus, by starting the process with the selection of the field of a book, the detailed display 20 of a book and a review shown in FIG. 9 which is the final display screen can be displayed as in the case of retrieving a keyword.

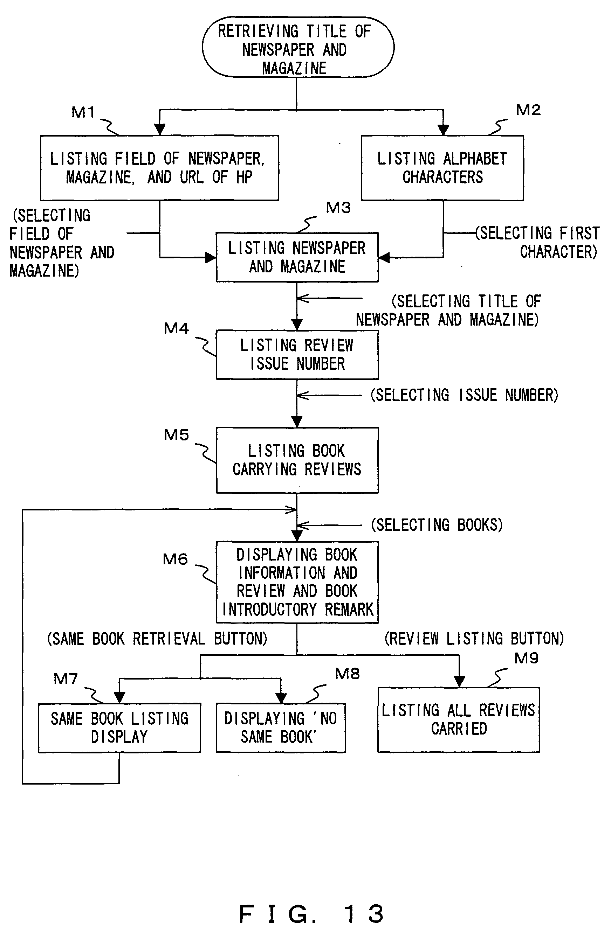

FIG. 13 is a flowchart of the screen operation and the flow of the displaying process corresponding to the screen operation performed after the operation button for selection 11c for retrieval of newspaper and magazine name on the page 'reputation of a book' is pressed by a client.

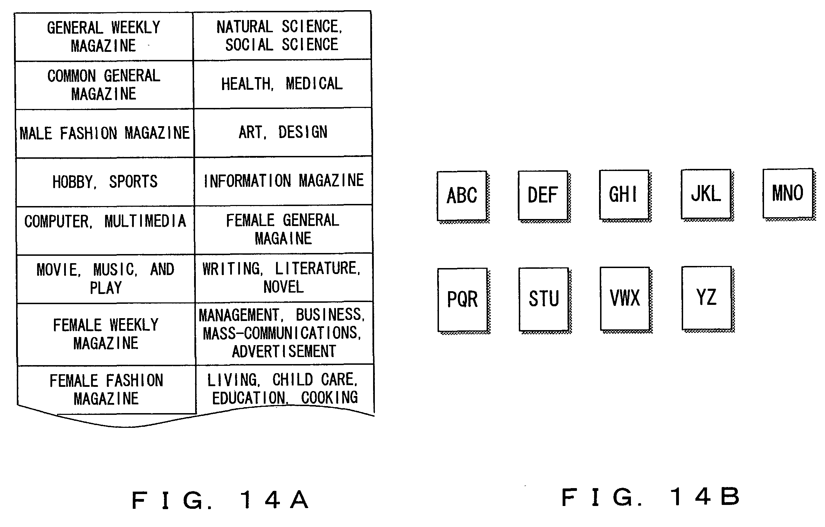

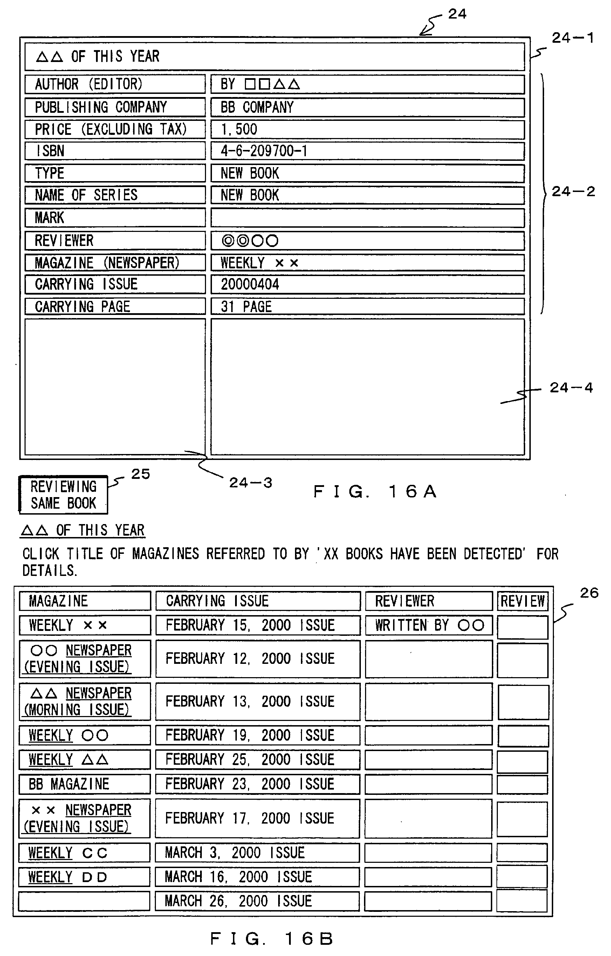

FIGS. 14A and 14B through FIGS. 16A and 16B show examples of displaying data used in the operation flow of retrieving the name of a newspaper and a magazine.

First, in retrieving the name of a newspaper and a magazine, the 'newspaper-magazine-URL/HP field list' process of the displaying process M1 and the 'alphabet character table' process of the displaying process M2 are performed as shown in FIG. 13. In this process, for example, data is displayed as shown in FIGS. 14A and 14B. FIG. 14A shows an example of displaying data by retrieving it from the URL field of a newspaper, a magazine, and an HP. A number of fields in the newspaper, the magazine, and the HP are displayed as ' general weekly magazine', 'common general magazine', ..., 'ladies' fashion magazine', ..., 'natural science, social science', ..., 'living, child care, education, cooking', ...

In the displaying process, beside or below the displayed data, for example, data shown in FIG. 14B is displayed. FIG. 14B shows an example of displaying data when a retrieving process is performed from the initial character of the name of the newspaper, the magazine, and the URL of the home page, and the initial characters ABC, DEF, GHI, JKL, MNO, PQR, STU, VWX, YZ of respective rows of the alphabet character table.

When the client clicks the field of the leading 'general magazine' in the newspaper-magazine-URL/HP field list shown in FIG. 14A, the process of displaying the 'newspaper-magazine-URL/HP name list' of the displaying process M3 shown in FIG. 13 is performed. In this displaying process, a new page is displayed. That is, a list of the names of the general weekly magazines including the 12 leading magazines (in the case of Japan) is displayed. Similar process is performed not only when the first 'general weekly magazine' is clicked, but also when data in other fields is clicked. The names of the newspapers or the magazines classified into the field are listed.

In addition, when data is to be retrieved from among the names of newspapers, magazines, or URLs of HPs, one of 'ABC, DEF, GHI, JKL, MNO, PQR, STU, VWX, YZ' is clicked. For example, when 'ABC' is clicked, the 'newspaper-magazine-URL/HP name listing' process of the displaying process M3 is performed. In this case, the names of newspapers, magazines, and URLs of HPs having the initial character 'A', 'B', or 'C' are all listed.

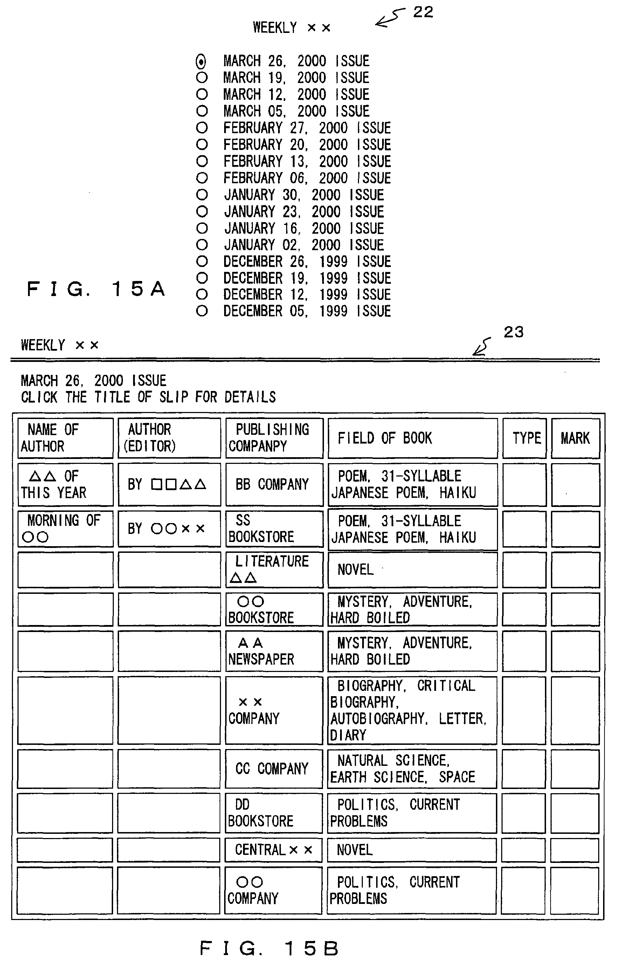

In this case, when one of the names of the listed newspapers, magazines or URLs of HPs is clicked, the 'review issue number listing' process of the displaying process M4 shown in FIG. 3 is performed. In this process, as shown in FIG. 15A, a review issue number listing display 22 is displayed with the names of the clicked newspapers, magazines, or HPs and the issue dates listed.

In the example shown in FIG. 15A, the clicked name 'Weekly xx' of a weekly magazine is displayed as a title in the review issue number listing display 22 below which the issue numbers carrying the review of a certain book are displayed from top to bottom, and from latest issue to oldest issue, for example, as a list of 'March 26, 2000', 'March 19, 2000', ..., 'December 5, 1999'. For the URL of an HP, the title of an URL page is displayed below which the issue date of the review is displayed.

When, for example, the first issue 'March 26, 2000' displayed in an example of displaying the review issue number listing display 22 of FIG. 15A is selected, the selected data is displayed as a dot in a round button. When it is clicked, the process of displaying the 'list of magazines carrying reviews' of the displaying process M5 shown in FIG. 13 is performed. In this displaying process, as shown in FIG. 15B, a book list 23 displaying a list of books carrying the reviews in the January issue of the magazines is displayed.

In this example, the records 9 of all books for which all reviews are carried in the selected issues (in this example, March 26, 2000) of the URL (in this example, Weekly xx) of the selected newspapers, magazines, and HPs are retrieved from a review database and extracted, and the book list 23 is displayed based on the extracted records 9.

In the example shown in FIG. 15B, 'Weekly xx' is displayed as the medium name selected on the top of the table. Then, 'March 26, 2000' is displayed as a selected issue. Below the issue date, display columns of the title of the book, an author (editor), a publishing company, the field of a book, a type, and a mark are displayed. The column of the title of a book displays the titles of the books for which reviews are carried in the issue of March 26, 2000 of the above mentioned Weekly xx. In the example shown in FIG. 15, ' ( ( of this year' is displayed in the book title column in the first row, 'written by ((((' is displayed in the author (editor) column, 'BB Company' is displayed as the name of a publishing company in the publishing company column, and 'poem, a 31-syllable Japanese poem, haiku' is displayed in the book field column.

Although nothing is displayed in the mark column, information is displayed when a present is prepared or a when a book can be read at the bookstore.

If the title of a desired book is clicked, the process of 'displaying book information and review and introduction' of the displaying process M6 shown in FIG. 13 is performed. The process of the displaying process M6 is similar to the displaying process H3 shown in FIG. 6 and the process of 'displaying book information and review and introduction' of the displaying process H14 shown in FIG. 11, and a book and summary detailed display 24 shown in FIG. 16A which is similar to the book and review detailed display 20 shown in FIG. 9 is displayed.

As in the case of the book and review detailed display 20, the book and summary detailed display 24 shows large characters of ' ( ( of this year' in the upper column 24-1. In the intermediate column 24-1 formed by the next row through the ninth row, the name of an author (editor), the name of a publishing company, the price of a book excluding tax, an ISBN number, the format or the series name of a book, a mark, the name of a reviewer, the name of the magazine (newspaper) of the review, the issue number of the review, and the issue page of the review are displayed.

In addition, the lower column is divided into the left column 24-3 and the right column 24-4, the image of the cover of the book is displayed in the left column 24-3, and the summary of the contents of the book provided from a publishing company is displayed in the right column 24-4. Up to this step, the process is the same as in the book and review detailed display 20.

In the book and summary detailed display 24, the contents of the review of each medium is not displayed below the display screen, but only the review carried by the issue of March 26, 2000 of the extracted Weekly xx is displayed. Then, the 'review list' button similar to the button of the book and review detailed display 20 and a 'same book retrieval button' 25 which is another button specific to the page is displayed.

When the 'review list' button is pressed, as in the case shown in FIG. 6 or FIG. 11, the displaying process capable of scrolling the 'list of all carried reviews' in the displaying process M9 shown in FIG. 13 is performed.

On the other hand, when the 'same book retrieval button' 25 is pressed, the server searches a review database as to whether or not a review of the same book has been carried by any medium other than the issue number or the selected issue or the selected Weekly xx. If it is determined based on the retrieval that no more reviews are carried by the same book, the 'no other displays' of the displaying process M8 is performed. It there are other reviews, the 'same book listing display' process of the displaying process M7 is performed. In this process, a same book list 26 shown in FIG. 16B is displayed.

In displaying the same book list 26, the selected title of a book '(( of this year' is displayed in the upper column below which a list relating to the same book comprising the columns of a magazine, an issue, a reviewer, and a review is displayed. When the client clicks a desired name of a magazine, the process of the displaying process M6 shown in FIG. 13 is performed, and control is returned to the display as shown in FIG. 16A. However, in this case, the 'review list' button is pressed, and a review by a desired reviewer or a publishing company can be detected from the list for appreciation.

In the review database according to the present invention, a client who cannot easily click buttons sequentially from the above mentioned operation buttons for selection 11c, 11d, and 11e shown in FIG. 5 can be provided with an opportunity to find a desired book or a valuable book.

A book can also be selected based on the presumption that a larger number of issues of reviews indicates a good reputation of the book. In this case, on the initial display screen shown in FIG. 5, the operation button for selection 11k for 'book reputation level' at the lower left end is pressed.

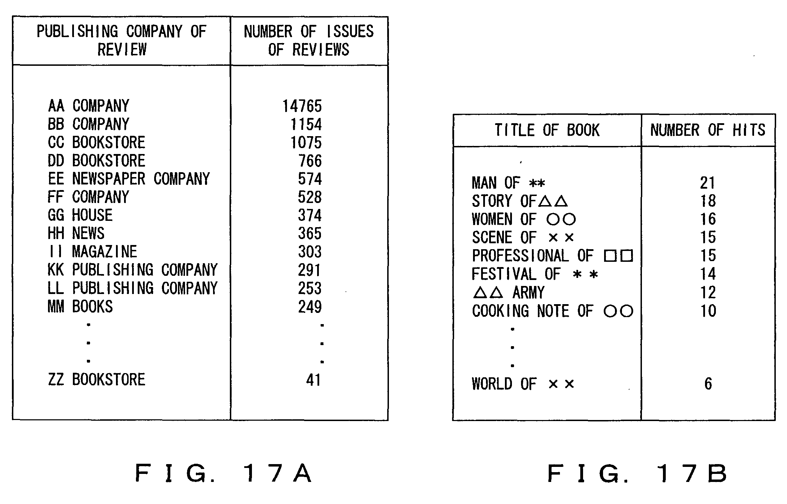

Thus, although not shown in the attached drawings, first, an operation button for selection ' 'for each book' , 'for each author', 'for each publishing company, for each field of book', etc. is displayed. For example, when the 'for each publishing company' button is pressed, the display as shown in FIG. 17A is displayed on the screen. In an example shown in FIG. 15A, the names of publishing companies AA, BB, CC, ..., ZZ are listed in the left column. In the right column, in the books published by these publishing companies, a total number of issues of a review is displayed for each publishing company within a predetermined period in the descending order. However, there can be a case in which only the order is displayed with the number of issues not displayed.

In the example shown in FIG. 15A, the number of times the review is carried in a book published by the top AA publisher is 14765 times. The number of times the review is carried in a book published by the next BB publisher is 1154 times. Thus, it can be determined that the book published by the AA publisher the best reputation, thereby selecting the book published by the AA publisher, and comparatively easily finding a desired book.

The display shown in FIG. 17A is an example of a display when the 'publishing company' is selected. When 'for each book' is selected, the titles of a book containing a review is listed in the left column. When 'for each author' is selected, the names of authors are listed. When 'for each field of book' is selected, the fields of books are listed.

In the display shown in FIG. 17A, when the names of publishing companies are displayed in the left column in FIG. 17A, and the name of a desired publishing company is clicked, the process of the displaying process H1 performed when control is passed from step S1 shown in FIG. 6 can be performed.

Furthermore, when the names of authors are displayed in the left column in FIG. 17A, and the name of a desired author is clicked, the process of the displaying process H1 performed when control is passed from step 32 shown in FIG. 6 can be performed. Similarly, when the fields of books are displayed in the left column in FIG. 17A, and the field of a desired book is clicked, the process of the displaying process H12 shown in FIG. 11 can be performed.

In addition, a desired book can be selected not based on the number of issues of a review, but based on the number of times other clients have selected. That is, a book can be selected based on the presumption that a larger number of hits of a book indicates a good reputation of the book. In this case, when the 'book reputation level' button is pressed at the lower left end shown in FIG. 5, two buttons 'review' and 'number of hits' are displayed first. When the 'review' is selected, the above mentioned operation buttons for selection such as the above mentioned 'for each book', 'for each author', 'for each publishing company', 'for each field of book', etc., and the display shown in FIG. 17A are displayed.

When 'number of hits' is selected, for example, the operation buttons for selection such as 'for each field of magazine', 'for each magazine', 'for each field of book', 'for each book', 'for each author', 'for each publishing company', etc. are displayed. Based on the selected classification, the display shown in FIG. 17B is performed.

FIG. 17B shows an example of the display when an operation button for selection for each book is pressed. In the left column, the titles of books such as 'A story of ** Men', 'Women of oo', etc. are listed in the descending order from the book having the largest number of hits. In the right column, the number of hits, for example, 21, 18, ... , are sequentially listed. In this case, the number of hits may not be displayed with only the order displayed.

In any case, a user can easily determine and extract an appropriate book as a desired reading book or determine it as a valuable reading book by checking the number of hits, the rank, and the title of the book shown in the display.

In this case, the process of the displaying process H1 from the process in step S1 shown in FIG. 6 can be performed by clicking the title of a book in the left column. The same process can be performed when selection is made for each field of magazine, for each magazine, for each field of book, for each author or publishing company.

The classification by the number of hits is also performed by accumulating the number of times of selection by the client determining from the classification and statistics of the books whose reviews have been carried. In any case, a review database is stored based on the reviews of books.

The present invention provides the opportunity of easily detecting a desired book based on the statistics of reviews. This method is also applicable to various information provided by other media such as CD, TB, BS, etc.

In the above mentioned embodiments, the title of a child page is 'reputation of a book', 'reputation of a CD', etc. However, the present invention is not limited to this application. That is, the title of a home page can be appropriately changed. This holds true with menu, too.

## Claims

**1.** A review data retrieval system in which a server(2-1,2-2) having a review database and a client(4,5,6) retrieving and obtaining data of a desired review from the server(2-1,2-2) are connected to a network(1), wherein:
said server(2-1,2-2) has data(9) including at least a title of a book whose review or an introductory remark is carried by a medium in the database and a name of the medium carrying the review or the introductory remark; and
at a request of the client(4,5,6), at least the title of the book and a number of times the review or the introductory remark is carried by the medium are output to the client(4,5,6) through the network(1).

**2.** The system according to claim 1, wherein
said server(2-1,2-2) further comprises in the database the data(9) of reading characters of a title of a book, a name of an author or editor, a name of a publisher, a name of a reviewer or selector to be output to the client(4,5,6) through the network(1).

**3.** The system according to claim 1 or 2, wherein
said server(2-1,2-2) further comprises in the database the data(9) of a year and a month of a publication, a publisher, an issuer, a type, an ISBN code, a list price, and a price of a body of a first edition, a second impression, printing, revised version, etc. of a book to be output to the client (4, 5, 6) through the network(1).

**4.** The system according to claim 1, 2, or 3, wherein
said sever(2-1,2-2) further comprises in the database the data(9) of a field of the book, a field, an issue date, a publication date, a magazine code, a listing year, month, and page of the review or the introductory remark of the medium on which the review or the introductory remark of the book is listed to be output to the client(4,5,6) through the network(1).

**5.** The system according to claim 1, 2, 3, 4, or 5 wherein
said server (2-1,2-2) further comprises a summary of contents of the book to be output to the client (4,5,6) through the network(1).

**6.** The system according to claim 1, 2, 3, 4, or 5 wherein
said server (2-1,2-2) further comprises a graphic database containing the graphic data(9) of the cover of the book to be output to the client(4,5,6) through the network(1).

**7.** The system according to claim 4, wherein
said server(2-1,2-2) includes the database such that it can be retrieved from the client(4,5,6) using a keyword indicating a name of a medium containing a review or an introductory remark, a field of the medium, a a field of a book, or contents of the book.

**8.** The system according to claim 4, wherein
said server(2-1,2-2) outputs results of counting the number of processes of specifying retrieval by the client (4, 5, 6) in the database for each medium on which a review or an introductory remark is listed, for each field of a medium, for each title of a book, for each field of a medium, for each title of a book, for each field of a book, for each author, for each publisher, or for each keyword to the client(4,5,6) through the network(1).

**9.** The system according to claim 1, 2, 3, 4, 5, 6, 7, or 8 wherein
said database is sequentially deleted if a predetermined period has passed.

**10.** The system according to claim 1, wherein
said server(2-1,2-2) outputs data(9) of a number of times of listing on a medium a review or an introductory remark for each book, for each field of the book, for each publisher, or for each author in a descending order within a predetermined term of listing the review or the introductory remark for each book, for each field of the book, for each publisher, or for each author.

**12.** The system according to claim 1, wherein
said medium is a magazine or a newspaper.

**13.** The system according to claim 1, wherein
said client(4,5,6) is a personal computer, a LAN terminal, or a mobile type communications appliance.

**14.** The system according to claim 1, wherein
said server(2-1,2-2) outputs a plurality of reviews listed on the medium of the book together with the title of the book such that they can be displayed as a list to the client(4,5,6) through the network(1).

**15.** The system according to claim 1, wherein
said server(2-1,2-2) classifies the books based on the reviews and displays the books as a list and outputs the data(9) to the client(4,5,6) through the network(1).
